# EUROPÄISCHE PATENTSCHRIFT

(11) **EP 1 076 793 B1**
(45) Veröffentlichungstag und Bekanntmachung des Hinweises auf die Patenterteilung: **02.07.2003**
(21) Anmeldenummer: 99923414.9
(22) Anmeldetag: 14.04.1999
(51) Int. Cl.: F16S 1/02

(54) **KOMBINATION AUS EINEM VERBINDUNGSELEMENT UND ZWEI LÄNGLICHEN PROFILTEILEN**
COMBINATION OF A CONNECTING ELEMENT AND TWO LONGISH PROFILS
COMBINAISON D'UN ELEMENT D'ASSEMBLAGE ET DE DEUX PROFILS ALLONGES

(30) Priorität: 25.04.1998 DE 19818597
(43) Veröffentlichungstag der Anmeldung: 21.02.2001
(73) Patentinhaber: DaimlerChrysler AG, 70567 Stuttgart (DE)
(72) Erfinder: THOMS, Volker, D-75365 Calw (DE); WURL, Willi, D-71543 Wüstenrot (DE)
(86) Internationale Anmeldenummer: EP9902494
(87) Internationale Veröffentlichungsnummer: WO99056056

(56) Entgegenhaltungen:
- DE-A- 3 248 072
- DE-A- 3 423 967
- DE-A- 4 012 206
- GB-A- 193 090
- US-A- 3 622 186

## Beschreibung

Die Erfindung betrifft eine Kombination aus einem Verbindungselement und zwei Profilteilen mit den Merkmalen des Oberbegriffs des Anspruchs 1. Die Erfindung betrifft außerdem ein Verfahren zur Herstellung eines Verbindungselements dieser Kombination.

Eine derartige Kombination ist aus der US 3 622 186 bekannt und zeigt ein Verbindungselement zum Verbinden von zwei benachbarten länglichen Profilteilen, deren Längsachsen einen Winkel einschließen. An den Innenseiten von zwei diesen Winkel einschließenden Seiten des Verbindungselements sind in der den Winkel enthaltenden Ebene seitlich vorstehende Haltekanten angeordnet, die jeweils durch einen verformbaren, profilierten Haltesteg verbunden sind. Diese Haltekanten wirken mit korrespondierenden Aufnahmen zusammen, die an den dem Verbindungselement zugewandten Außenseiten der Profilteile ausgebildet sind. Das bekannte Verbindungselement kann bei unverformten Haltestegen mit seinen Haltekanten zwischen den Aufnahmen an die Außenseiten der Profilteile angesetzt werden. Durch Verformen der Haltestege wird das Profil der Haltestege in der den vorgenannten Winkel enthaltenden Ebene seitlich nach außen gestreckt, wobei sich die Haltekanten voneinander entfernen und seitlich Hinterschneidungen der Aufnahmen hintergreifen.

Aus der DE 40 12 206 C2 ist ein Verbundelement bekannt, das sich aus wenigstens einem plattenförmigen Element und wenigstens einem durch ein Strangpreßprofil gebildeten länglichen Profilteil zusammensetzt, wobei an jedem plattenförmigen Element zumindest ein profilierter, verformbarer Haltesteg ausgebildet ist, der jeweils mit einer mit dem Haltesteg korrespondierenden rinnenförmigen Aufnahme des Profilteils zusammenwirkt. Die Verbindung des den Haltesteg aufweisenden plattenförmigen Elementes mit dem die rinnenförmige Aufnahme aufweisenden länglichen Profilteil zu dem bekannten Verbundelement erfolgt dadurch, dass durch Umformen des im Anlieferungszustand dachförmig oder V-förmig profilierten und im umgeformten Zustand eine gestreckte, gerade Form einnehmenden Haltesteges eine formschlüssige Fügeverbindung zwischen dem plattenförmigen Element und dem Profilteil gebildet wird, bei der Randabschnitte des Haltesteges seitlich Hinterschneidungen der Aufnahme hintergreifen. Eine solche formschlüssige Fügeverbindung läßt sich beispielsweise mit einem entsprechenden Stempelwerkzeug relativ einfach realisieren. Dabei weist das auf diese Weise hergestellte Verbundelement sehr hohe Festigkeitswerte auf. Diese Art der Verbindungstechnik hat sich in der Praxis bewährt.

Aus der DE 27 51 753 A1 ist eine Wagenkastenkonstruktion bekannt, bei der senkrecht aneinanderstoßende Profilstäbe mit Hilfe eines Eckverbindungsstückes aneinander befestigt werden. Das Eckverbindungsstück weist auf zwei senkrecht aufeinander stehenden Außenseiten jeweils wenigstens ein Klemmstück auf, das über eine Schraube am Eckverbindungsstück befestigbar ist. Zur Verbindung der Profilstäbe wird das Eckverbindungsstück in eine sich zwischen den rechtwinklig aneinanderstoßenden Profilstäben ausbildende Ecke eingesetzt, wobei die Klemmstücke des Eckverbindungsstückes in entsprechende, in Längsrichtung der Profilstäbe verlaufende Längsnuten eindringen können. Solange die Befestigungsschrauben der Klemmstücke nicht festgezogen sind, sind die Klemmstücke schwenkbar und können dadurch in eine Lage verstellt werden, in der sie in den Längsnuten vorgesehene Hinterschneidungen seitlich hintergreifen. In diesen Stellungen werden die Befestigungsschrauben der Klemmstücke festgezogen, wodurch das Eckverbindungsstück an beiden Profilstäben befestigt ist und somit die Profilstäbe miteinander verbindet. Das Eckverbindungselement ist als Gußteil konzipiert, weist eine Vielzahl von Einzelbestandteilen, wie Schrauben, Klemmstükke, auf und ist folglich in seiner Herstellung relativ aufwendig. Außerdem müssen für einen anderen Winkel zwischen den miteinander zu verbindenden Profilstäben ein passendes Eckverbindungsstück und die dazu notwendige Gießform vollständig neu entwickelt werden, wodurch lediglich die Verwendung von Standardwinkeln (z.B. 90°) wirtschaftlich sinnvoll ist.

Die vorliegende Erfindung beschäftigt sich mit dem Problem, eine Kombination der eingangs genannten Art anzugeben, mit der eine Verbindung von zwei aneinander anliegenden, einen Winkel α einschließenden Profilteilen mit einer hohen Winkelstabilität und folglich mit einer hohen Steifigkeit erzielbar ist.

Dieses Problem wird erfindungsgemäß durch eine Kombination mit den Merkmalen des Anspruches 1 gelöst, da das Verbindungselement durch die zwei parallel zueinander verlaufenden Wände selbst eine hohe Winkelstabilität und Steifigkeit aufweist, so dass eine mit Hilfe dieses Verbindungselementes hergestellte Verbindung zwischen zwei Profilteilen ebenfalls eine hohe Winkelstabilität und Steifigkeit erhält.

Zur Herstellung des Verbindungselementes braucht nur ein, insbesondere durch Strangpressen herstellbares, Profil verwendet zu werden, das die Anwendung der eingangs beschriebenen, eine formschlüssige Fügeverbindung ausbildenden Verbindungstechnik ermöglicht, wobei beispielsweise zwei auf Gehrung geschnittene Teile dieses Profils ins geeigneter Weise aneinander befestigt werden. Obwohl durch die erforderliche Verbindung von zwei einzelnen, entsprechend zugeschnittenen einzelnen Profilteilen, im Vergleich zu einer Herstellung mit einer Gießform, ein zusätzlicher Herstellungsschritt notwendig ist, überwiegt beim erfindungsgemäßen Verbindungselement der Vorteil, dass es ohne zusätzliche Kosten mit beliebigem Winkel α herstellbar ist. Außerdem erübrigt die Verwendung der eingangs geschilderten Verbindungstechnik zusätzliche Befestigungsmittel wie Klemmstücke, Schrauben.

Entsprechend einer besonders zweckmäßigen Ausgestaltungsform des erfindungsgemäßen Kombination kann das Profil der Haltestege rinnenförmig ausgebildet sein, wobei die offene Seite dieser Rinne nach außen orientiert ist. Vorzugsweise kann dabei die Rinne V-förmig oder abgerundet ausgebildet sein. Die vorgeschlagenen Ausgestaltungsformen ermöglichen eine besonders wirksame Anbindung bzw. Befestigung des Verbindungselementes an den Profilteilen und gewährleisten dadurch eine besonders hohe Stabilität der auf diese Weise hergestellten Verbindung zwischen den Profilteilen.

Das der Erfindung zugrundeliegende Problem wird auch durch ein Verfahren mit den Merkmalen des Anspruches 8 gelöst.

Das erfindungsgemäße Verfahren beruht auf dem allgemeinen Gedanken, zur Herstellung des Verbindungselementes ein Strangpreßprofil zu verwenden, welches das Profil der Außenseiten, mit dem die Anbindung an die Profilteile realisiert wird, in gespiegelter Form doppelt enthält. Dadurch kann das Verbindungselement mit dem gewünschten Winkel α mit zwei durch geeignete Schnitte vom Strangpreßprofil abgetrennten Einzelteilen insbesondere abfallfrei hergestellt werden. Hierbei läßt sich im Prinzip jeder beliebige Winkel α erzielen, in dem ein Gehrungsschnitt durchgeführt wird, dessen Schnittebene mit der Symmetrieebene bzw. Spiegelebene der den Außenseiten zuzuordnenden Profile einen Winkel β einschließt, der halb so groß ist wie der gewünschte Winkel α zwischen den Außenseiten des Verbindungselementes. Durch ein daran anschließendes Drehen der durch den Gehrungsschnitt separierten Einzelteile um eine senkrecht auf der Schnittebene des Gehrungsschnittes stehende Achse um 180° erhalten die Einzelbestandteile des Verbindungselementes eine Relativlage, in der die Außenseiten des auf diese Weise gebildeten Verbindungselementes den Winkel α einschließen.

Entsprechend einer Weiterbildung des erfindungsgemäßen Verfahrens können die relativ zueinander um 180° versetzt aneinander angesetzten Teile des Verbindungselementes durch Verschweißen der Wände entlang des Gehrungsschnittes aneinander befestigt werden, wodurch sich in besonders einfacher Weise eine ausreichend stabile Verbindung der Einzelteile zum Verbindungselement ergibt.

Entsprechend einer zweckmäßigen Ausgestaltungsform des erfindungsgemäßen Verfahrens kann vor oder nach dem Befestigen der aneinander angesetzten Teile des Verbindungselementes jeweils ein Teil der Wände durch einen Schnitt abgetrennt werden, der in einer die Gehrungsschnitte schneidenden Ebene verläuft. Diese Maßnahme führt zu einer erheblichen Gewichtseinsparung, ohne dass dadurch die Steifigkeit des Verbindungselementes nennenswert beeinträchtigt wird.

Weitere wichtige Merkmale und Vorteile der Erfindung ergeben sich aus den Unteransprüchen, den Zeichnungen und aus der nachfolgenden Beschreibung bevorzugter Ausführungsformen anhand der Zeichnungen. Es zeigen, jeweils schematisch,
- Fig. 1: Prinzipskizzen A und B zur Veranschaulichung der beim Verbindungselement nach der Erfindung verwendeten Verbindungstechnik,
- Fig. 2: Prinzipskizzen A, B zur Veranschaulichung einer Befestigung von zwei aneinandergrenzenden Profilteilen mit dem erfindungsgemäßen Verbindungselement,
- Fig. 3: eine perspektivische Ansicht eines Strangpreßprofiles, das als Ausgangsmaterial zur Herstellung des erfindungsgemäßen Verbindungselementes dient, und
- Fig. 4: eine perspektivische Draufsicht auf ein entsprechend dem erfindungsgemäßen Verfahren hergestelltes Verbindungselement.

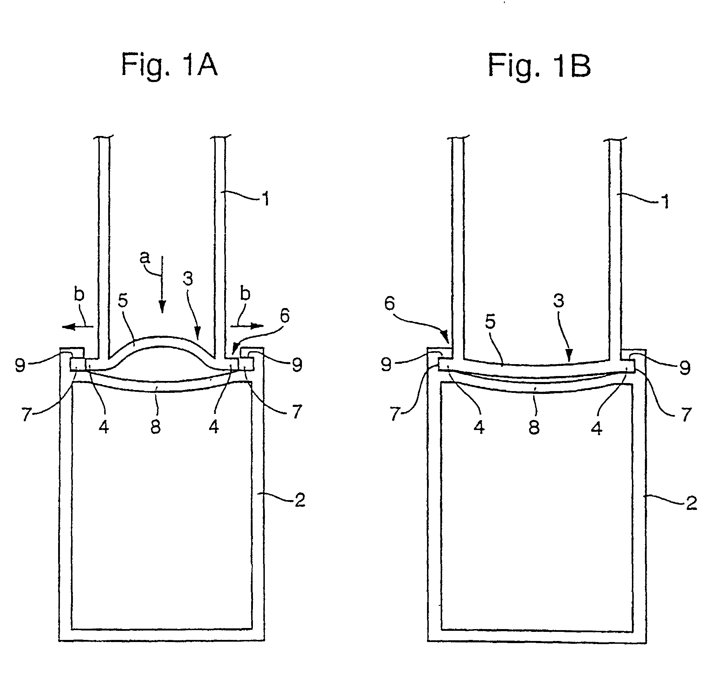

Entsprechend Fig. 1 weist ein erstes Bauteil 1, das an einem zweiten Bauteil 2 befestigt werden soll, an seiner dem zweiten Bauteil 2 zugewandten Außenseite 3 Haltekanten 4 auf, die seitlich über die Kontur des ersten Bauteils 1 vorstehen. Die sich gegenüberliegenden Haltekanten 4 sind an ihren einander zugewandten Innenseiten über einen Haltesteg 5 miteinander verbunden.

Im unverformten Ausgangszustand entsprechend Fig. 1A weist der Haltesteg 5 eine gekrümmte Form auf und bildet eine gegenüber dem zweiten Bauteil 2 offene Rinne. Um die Verbindung zwischen den Bauteilen 1 und 2 herzustellen wird das erste Bauteil 1 mit seiner Außenseite 3 vorausgehend in eine Ausnehmung 6 des zweiten Bauteils 2 eingeführt, wobei die Haltekanten 4 zwischen zwei die Ausnehmung 6 seitlich begrenzenden Aufnahmen 7 positioniert sind, wenn die Außenseite 3 des ersten Bauteils 1 an der dieser zugewandten Seite 8 des zweiten Bauteils 2 in der Ausnehmung 6 zur Anlage kommt. Wird im Anschluß daran der Haltesteg 5 beispielsweise mit einem in Richtung des Pfeiles a wirkenden Druckstempel verformt, streckt sich der Haltesteg 5 und die damit verbundenen Haltekanten 4 werden entsprechend den Pfeilen b sich voneinander entfernend, nach außen seitlich verdrängt, wobei sie in die Aufnahmen 7 eindringen und seitliche Hinterschneidungen 9 der Aufnahmen 7 hintergreifen, was in Fig. 1B dargestellt ist. Die mit Hilfe dieser Verbindungstechnik erzielte formschlüssige Anbindung des ersten Bauteils 1 an das zweite Bauteil 2 weist eine hohe Festigkeit auf. Durch eine entsprechende Abstimmung der Dimensionierung des Haltesteges 5 sowie eine entsprechende Abstimmung der Haltekanten 4 mit den Aufnahmen 7 läßt sich zusätzlich eine reibschlüssige Verbindung zwischen den Bauteilen 1 und 2 erzielen, so dass weder Bewegungen in Richtung der Zeichnungsebene der Fig. 1A und 1B noch senkrecht dazu möglich sind.

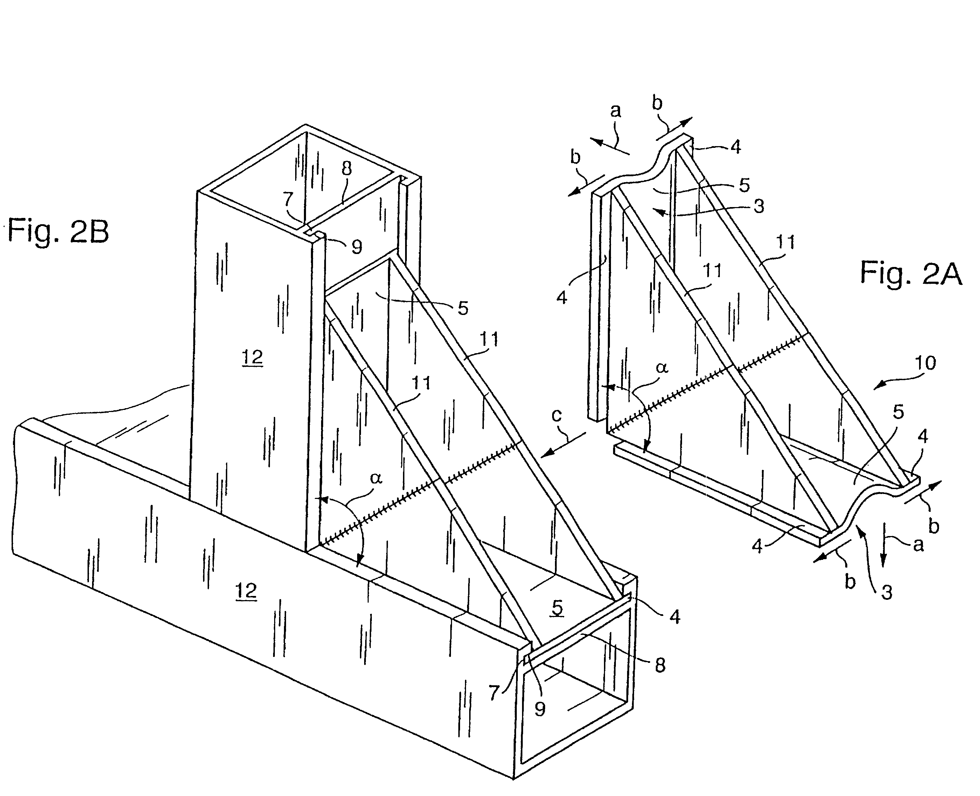

Fig. 2A zeigt ein erfindungsgemäßes Verbindungselement 10, das zwei mit Haltekanten 4 versehene Außenseiten 3 aufweist, die sich noch im unverformten Ausgangszustand (vgl. Fig. 1A) befinden. Dem entsprechend ist der die Haltekanten 4 einer Außenseite 3 verbindende Haltesteg 5 rinnenförmig gewölbt. Die Außenselten 3 schließen einen Winkel α (im Ausführungsbeispiel etwa 90°) ein und sind an ihren Rückseiten durch zwei parallel zueinander verlaufende Wände 11 miteinander verbunden. Die Wände 11 sind dabei entlang eines Übergangsbereiches zwischen einer Haltekante 4 und dem Haltesteg 5 befestigt oder einteilig mit der entsprechenden Außenseite 3 des Verbindungselementes 10 hergestellt.

Entsprechend Fig. 2B werden zwei benachbarte bzw. aneinander angrenzende als Profilstangen ausgebildete Profilteile 12 - unter Ausbildung des Winkels α zwischen ihren Längsachsen - aneinander befestigt, in dem das unverformte Verbindungselement 10 entsprechend Fig. 2A in die den Winkel α einschließende, zwischen den Profilstäben 12 ausgebildete Ecke eingebracht wird, was durch den Pfeil c angedeutet ist. Nach dem Einbringen des Verbindungselementes 10 werden dessen Außenseiten 3 bzw. deren Haltestege 5 entsprechend dem zu den Fig. 1A und 1B beschriebenen Verbindungsverfahren verformt, wobei wiederum die Haltekanten 4 des Verbindungselementes 10 in die entsprechenden, in den dem Verbindungselement 10 zugewandten Seiten 8 der Profilstangen 12 vorgesehenen Aufnahmen 7 eindringen und entsprechende Hinterschneidungen 9 hintergreifen.

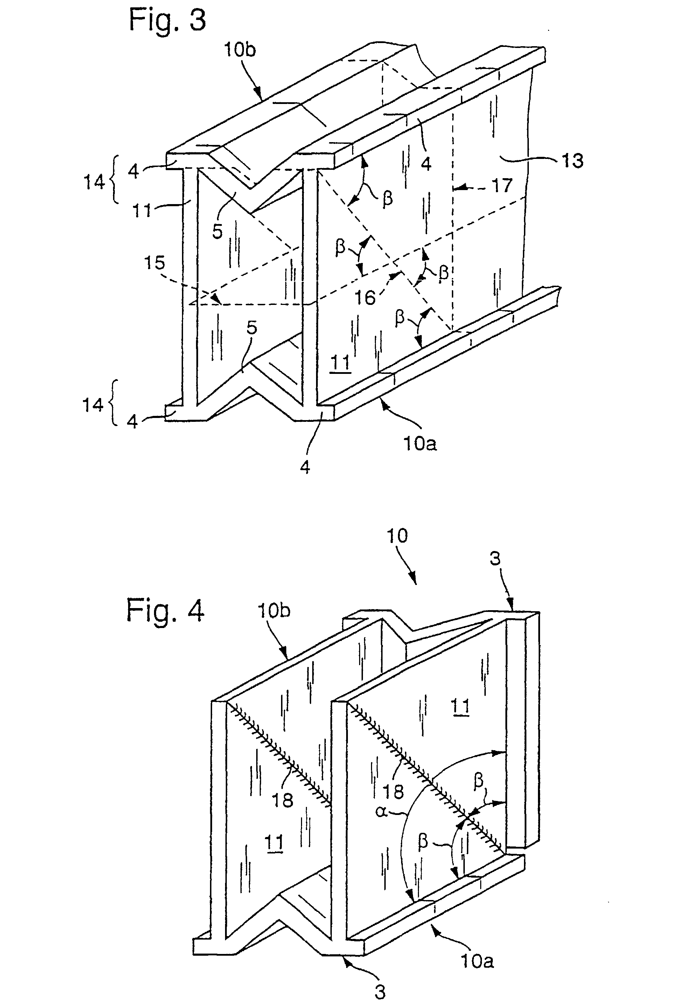

Während in den Fig. 1 und 2 der die Haltekanten 4 verbindende Haltesteg 5 in Form einer gewölbten Rinne ausgebildet ist, weist dieser in den Ausführungsbeispielen gemäß Fig. 3 und 4 ein V-förmiges oder dachförmiges Profil auf. Für die Herstellung des erfindungsgemäßen Verbindungselementes 10 wird entsprechend Fig. 3 ein Strangpreßprofil 13 verwendet, das einen aus den Haltekanten 4 und den diese verbindenden Haltesteg 5 gebildeten Profilbereich 14 zweifach enthält. Dieser Profilbereich 14 ist in Fig. 3 durch geschweifte Klammern gekennzeichnet und entspricht dem Profil einer Außenseite 3 des Verbindungselementes 10. Die Profilbereiche 14 sind im Strangpreßprofil 13 spiegelbildlich zu einer Symmetrieebene 15 angeordnet und durch die parallel zueinander verlaufenden Wände 11 miteinander verbunden.

Zur Herstellung des Verbindungselementes 10 wird zunächst durch einen Gehrungsschnitt ein erster Teil 10a vom Strangpreßprofil 13 abgetrennt. Dabei verläuft der Gehrungsschnitt in einer Schnittebene 16, die sich einerseits mit der Symmetrieebene 15 in einer Geraden schneidet, die quer zur Längsrichtung des Strangprofils 13 verläuft, und andererseits mit der Symmetrieebene 15 einen Winkel β einschließt, der halb so groß wie der zwischen den miteinander zu verbindenden Profilstangen 12 eingeschlossene Winkel α ist.

Im Anschluß daran wird ein zweiter Teil 10b vom Strangpreßprofil 13 mit einem in einer senkrecht zur Längsrichtung des Strangpreßprofiles 13 verlaufenden. Ebene 17 verlaufenden Schnitt abgetrennt.

Zur Bildung des erfindungsgemäßen Verbindungselementes 10 aus den Einzelbestandteilen 10a und 10b wird entsprechend Fig. 4 das zweite Teil 10b um eine senkrecht zur Gehrungsschnittebene 16 verlaufende Drehachse um 180° gedreht, so dass die durch den Gehrungsschnitt an den Wänden 11 ausgebildeten Schnittkanten wechselseitig aneinander zur Anlage kommen. Die aneinander anliegenden Schnittkanten der einzelnen Teile 10a und 10b werden entsprechend Fig. 4 beispielsweise mit einer Schweißnaht 18 miteinander verbunden. Aufgrund der geometrischen Verhältnisse ist der Winkel β jeweils auch zwischen Gehrungsschnitt bzw. Naht 18 und den in Fig. 4 durch die Profilbereiche 14 gebildeten Außenseiten 3 vorhanden, so dass sich der zwischen den Außenseiten 3 des Verbindungselementes 10 eingeschlossene Winkel zu β + β = α ergibt.

Um das nach dem erfindungsgemäß vorgeschlagenen Verfahren hergestellte Verbindungselement 10 aus Fig. 4 in die Form des in Fig. 2A dargestellten Verbindungselementes 10 zu bringen, können von dem eingeschlossenen Winkel α abgewandte Teile der Wände 11 beispielsweise mit einem Schnitt abgetrennt werden, der in einer Ebene verläuft, die senkrecht auf den Gehrungsschnitten bzw. auf den Schweißnähten 18 steht und durch die von dem eingeschlossenen Winkel α abgewandten Enden der Außenseiten 3 verläuft.

Das erfindungsgemäße Verbindungselement 10 kann beispielsweise zum Aufbau eines selbsttragenden Gitterrahmens als Tragstruktur in einem Omnibus verwendet werden.

## Patentansprüche

1. Kombination aus einem Verbindungselement (10) und zwei länglichen Profilteilen (12), wobei die Profilteile (12) zu ihrer Verbindung zueinander benachbart angeordnet sind, derart, dass ihre Längsachsen einen Winkel (α) einschließen, wobei an den Außenseiten (3) von zwei den Winkel (α) einschließenden Seiten des Verbindungselements (10) seitlich vorstehende Haltekanten (4) angeordnet sind, die jeweils durch einen verformbaren, profilierten Haltesteg (5) verbunden sind und die mit korrespondierenden Aufnahmen (7) an den dem Verbindungselement (10) zugewandten Außenseiten (8) der Profilteile (12) zusammenwirken, dergestalt, dass das Verbindungselement (10) bei unverformten Haltestegen (5) mit seinen Haltekanten (4) zwischen den Aufnahmen (7) an die Außenseiten (8) der Profilteile (12) ansetzbar ist und durch Verformen der Haltestege (5) deren Profil gestreckt wird und die sich dabei voneinander entfernenden Haltekanten (4) seitlich Hinterschneidungen (9) der Aufnahmen hintergreifen,
**dadurch gekennzeichnet,**
- **dass** die Haltekanten (4) des Verbindungselements (10) quer zu der den Winkel (α) enthaltenden Ebene seitlich vorstehen,
- **dass** das Profil der Haltestege (5) beim Verformen quer zu der den Winkel (α) enthaltenden Ebene seitlich nach außen gestreckt wird und
- **dass** die den Winkel (α) einschließenden Außenseiten (3) des Verbindungselements (10) an ihrer Rückseite durch zwei parallel verlaufende Wände (11) miteinander verbunden sind, die jeweils entlang eines Übergangsbereiches zwischen Haltesteg (5) und Haltekante (4) angeordnet sind.

2. Kombination nach Anspruch 1,
**dadurch gekennzeichnet,**
**dass** das Profil der Haltestege (5) rinnenförmig ausgebildet ist, wobei die offene Seite dieser Rinne nach außen orientiert ist.

3. Kombination nach Anspruch 2,
**dadurch gekennzeichnet,**
**dass** die Rinne V-förmig oder abgerundet ausgebildet ist.

4. Kombination nach einem der Ansprüche 1 bis 3,
**dadurch gekennzeichnet,**
**dass** das Verbindungselement (10) wenigstens aus zwei Bauteilen besteht, die insbesondere durch Verschweißen, aneinander befestigt sind.

5. Kombination nach Anspruch 4,
**dadurch gekennzeichnet,**
**dass** jedes der aneinander befestigten Bauteile zwei Haltekanten (4) und den diese verbindenden Haltesteg (5) aufweist.

6. Kombination nach einem der Ansprüche 1 bis 3,
**dadurch gekennzeichnet,**
**dass** das Verbindungselement (10) einteilig als Gußbauteil hergestellt ist.

7. Kombination nach Anspruch 6,
**dadurch gekennzeichnet,**
**dass** das Verbindungselement (10) mit einem Vakuumdruckgußverfahren oder einem Thixocastingverfahren oder einem Thixoformingverfahren hergestellt ist.

8. Verfahren zur Herstellung eines Verbindungselementes nach einem der Ansprüche 1 bis 5,
**gekennzeichnet durch folgende Schritte:**
A: ein Profil (13), das einen aus den Haltekanten (4) und dem diese verbindenden Haltesteg (5) gebildeten Profilbereich (14) doppelt enthält, wobei die sich bezüglich einer in Längsrichtung des Profils (13) verlaufenden Symmetrieebene (15) spiegelsymmetrisch gegenüberliegenden Profilbereiche (14) **durch** parallele Wände (11) miteinander verbunden sind, wird **durch** Strangpressen hergestellt,
B: von diesem Strangpreßprofil (13) wird mit einem Gehrungsschnitt ein erster Teil (10a) abgetrennt, wobei sich die Schnittebene (16) und die Symmetrieebene (15) in einer Geraden schneiden, die senkrecht zur Längsrichtung des Strangpreßprofils (13) verläuft, und wobei ein Winkel (β), mit dem die Schnittebene (16) die Symmetrieebene (15) schneidet, halb so groß ist, wie der Winkel (α), den die Längsachsen der miteinander zu verbindenden Profilteile (12) einschließen,
C: ein den Gehrungsschnitt enthaltender zweiter Teil (10b) wird vom Strangprofil (13) senkrecht zu dessen Längsrichtung abgetrennt und
D: die beiden Teile (10a und 10b) werden an ihren relativ zueinander um 180° versetzten Gehrungsschnitten aneinander angesetzt und aneinander befestigt.

9. Verfahren nach Anspruch 8,
**dadurch gekennzeichnet,**
**dass** die in Schritt D aneinander angesetzten Teile (10a und 10b) des Verbindungselementes (10) durch Verschweißen (18) der Wände (11) entlang des Gehrungsschnittes aneinander befestigt werden.

10. Verfahren nach Anspruch 8 oder 9,
**dadurch gekennzeichnet,**
**dass** vor oder nach dem Befestigen der in Schritt D aneinander angesetzten Teile (10a und 10b) des Verbindungselementes (10) ein Teil der Wände (11) jeweils durch einen in einer die Gehrungsschnitte schneidenden Ebene verlaufenden Schnitt abgetrennt wird.

## Claims

1. Combination of a connection element (10) and two elongated section components (12), the section components (12) being arranged adjacent to one another to enable them to be connected together in such manner that their longitudinal axes enclose an angle (α), such that on the outer sides (3) of two sides of the connection element (10) which enclose the angle (α) there are arranged laterally projecting holding edges (4), each respectively connected by a deformable, profiled holding web (5) and which cooperate with corresponding recesses (7) on the outer sides (8) of the section components (12) facing towards the connection element (10), designed so that when the holding webs (5) are undeformed, the connection element (10) can be positioned with its holding edges (4) between the recesses (7) on the outsides (8) of the section components (12) and, when the holding webs (5) are deformed by stretching their profile, the holding edges (4) move apart from one another and thereby engage with lateral undercuts (9) of the recesses,
**characterised in that**
- the holding edges (4) of the connection element (10) project sideways transversely with respect to the plane containing the angle (α),
- the profile of the holding web (5) is stretched sideways and outwards when it is deformed transversely to the plane containing the angle (α),
- the outer sides (3) of the connection element (10) which enclose the angle (α) are, on their rear side, connected to one another by two parallel walls (11), each arranged along a transition zone between the holding web (5) and a holding edge (4).

2. Combination according to Claim 1,
**characterised in that**
the profile of the holding web (5) is formed in the shape of a channel, whose open side is directed outwards.

3. Combination according to Claim 2,
**characterised in that**
the channel is formed with a V-shape or with a rounded shape.

4. Combination according to any of Claims 1 to 3,
**characterised in that**
the connection element (10) consists of at least two components, which are joined to one another in particular by welding.

5. Combination according to Claim 4,
**characterised in that**
each of the components joined to one another has two holding edges (4) and the holding web (5) that connects them.

6. Combination according to and of Claims 1 to 3,
**characterised in that**
the connection element (10) is made in one piece as a cast component.

7. Combination according to Claim 6,
**characterised in that**
the connection element (10) is produced by means of a vacuum pressure-diecasting process or a thixo-casting process or a thixoforming process.

8. Process for the production of a connection element according to any of Claims 1 to 5,
**characterised by the following steps:**
**A:** a section (13) comprising a profiled area formed of the holding edges (4) and the holding web (5) that connects them, duplicated such that relative to a plane of symmetry (15) extending in the longitudinal direction of the section (13), profiled areas (14) mirror-symmetrically opposite one another are connected together by parallel walls (11), is produced by extrusion,
**B:** from this extruded section (13), by means of a mitre cut, a first component (10a) is cut off, such that the plane of the cut (16) and the plane of symmetry (15) intersect along a line extending perpendicularly to the longitudinal direction of the extrusion (13), and such that the angle (β) at which the plane of the cut (16) intersects the plane of symmetry (15) is half as large as the angle (α) enclosed by the longitudinal axes of the section components (12) to be joined together,
**C:** a second component (10b) containing the mitre cut is cut from the extrusion (13) perpendicularly to its longitudinal direction, and
**D:** the two components (10a and 10b), with their mitre cuts rotated relative to one another by 180°, are put together along the cuts and joined together.

9. Process according to Claim 8,
**characterised in that**
the components (10a and 10b) of the connection element (10) are joined to each other by welding (18) the walls (11) along the mitre cut.

10. Process according to Claims 8 or 9,
**characterised in that**
before or after the components (10a and 10b) of the connection element (10) positioned against one another in step D have been joined, part of the walls (11) is in each case trimmed off by a cut made in a plane that intersects the mitre cuts.

## Revendications

1. Combinaison d'un élément d'assemblage (10) et de deux pièces de profilé allongées (12), les pièces de profilé (12) étant disposées, pour leur assemblage, de manière voisine l'une de l'autre, de façon que leurs axes longitudinaux forment un angle (α) entre eux, combinaison dans laquelle sur les côtés extérieurs (3) de deux côtés de l'élément d'assemblage (10) définissant l'angle (α), sont disposés des bords de retenue (4) faisant saillie latéralement, qui sont reliés respectivement par une branche de retenue (5) profilée et déformable, et qui interagissent avec des logements de réception (7) correspondants sur les cotés extérieurs (8) des pièces de profilé (12), dirigés vers l'élément d'assemblage (10), de façon telle que l'élément de liaison (10), pour des branches de retenue (5) non déformées, puisse être appliqué avec ses bords de retenue (4), entre les logements de réception (7), contre les côtés extérieurs (8) des pièces de profilé (12), et par déformation des branches de retenue (5), produisant l'allongement de leur profil et l'écartement ou l'éloignement réciproque des bords de retenue (4), ces derniers s'engageant latéralement sous des contre-dépouilles (9) des logements de réception,
**caractérisée**
- **en ce que** les bords de retenue (4) de l'élément d'assemblage (10) font saillie latéralement, transversalement au plan contenant l'angle (α),
- **en ce que** le profil des branches de retenue (5), lors de la déformation, est étendu latéralement vers l'extérieur, transversalement au plan contenant l'angle (α), et
- **en ce que** les côtés extérieurs (3) de l'élément d'assemblage (10), qui définissent l'angle (α), sont reliés mutuellement sur leur côté arrière, par deux parois (11) s'étendant parallèlement l'une à l'autre, et qui s'étendent chacune le long d'une zone de transition entre la branche de retenue (5) et le bord de retenue (4).

2. Combinaison selon la revendication 1, **caractérisée en ce que** le profil des branches de retenue (5) est d'une configuration en forme de goulotte, le côté ouvert de cette goulotte étant orienté vers l'extérieur.

3. Combinaison selon la revendication 2, **caractérisée en ce que** la goulotte est d'une configuration en forme de V ou arrondie.

4. Combinaison selon l'une des revendications 1 à 3, **caractérisée en ce que** l'élément d'assemblage (10) est formé d'au moins deux pièces qui sont fixées l'une à l'autre, notamment par soudage.

5. Combinaison selon la revendication 4, **caractérisée en ce que** chacune des pièces fixées l'une à l'autre comporte deux bords de retenue (4) et la branche de retenue (5) qui les relie.

6. Combinaison selon l'une des revendications 1 à 3, **caractérisée en ce que** l'élément d'assemblage (10) est réalisé d'un seul tenant en tant que pièce moulée.

7. Combinaison selon la revendication 6, **caractérisée en ce que** l'élément d'assemblage (10) est fabriqué par un procédé de moulage sous pression sous vide, ou un procédé dit de "thixocasting" ou "thixoforming".

8. Procédé de fabrication d'un élément d'assemblage selon l'une des revendications 1 à 5,
**caractérisé par** les étapes suivantes :
A: on fabrique par extrusion ou filage, un profilé (13), qui englobe en double une zone de profil (14) constituée des bords de retenue (4) et de la branche de retenue (5) qui les relie, les zones de profil (14) opposées de manière symétrique inverse par rapport à un plan de symétrie (15) qui s'étend dans la direction longitudinale du profilé (13), étant reliées mutuellement par des parois parallèles (11),
B: on sectionne de ce profilé extrudé (13), par une coupe d'onglet, une première partie (10a), le plan de coupe (16) et le plan de symétrie (15) se coupant en une droite qui s'étend perpendiculairement à la direction longitudinale du profilé extrudé (13), et un angle (β) formé par l'intersection du plan de coupe (16) avec le plan de symétrie (15), étant égal à la moitié de l'angle (α) que forme les axes longitudinaux des pièces de profilés (12) à assembler,
C: on sectionne du profilé extrudé (13), perpendiculairement à son axe longitudinal, une seconde partie (10b) renfermant la coupe d'onglet,
D: on applique et on fixe l'une à l'autre les deux parties (10a, 10b) le long de leurs coupes d'onglet décalées relativement de 180° l'une par rapport à l'autre.

9. Procédé selon la revendication 8, **caractérisé en ce que** les pièces (10a, 10b) de l'élément d'assemblage (10) appliquées l'une contre l'autre dans l'étape D, sont fixées l'une à l'autre par soudage (18) des parois (11) le long de la coupe d'onglet.

10. Procédé selon la revendication 8 ou 9, **caractérisé en ce qu'**avant ou après la fixation mutuelle des pièces (10a et 10b) de l'élément d'assemblage (10), appliquées l'une contre l'autre dans l'étape D, une partie des parois (11) est respectivement sectionnée par une coupe s'étendant dans un plan coupant les coupes d'onglet.
